(19) Europäisches Patentamt / European Patent Office / Office européen des brevets

(11) **EP 4 299 307 A1**

(12) **EUROPEAN PATENT APPLICATION**
published in accordance with Art. 153(4) EPC

(43) Date of publication:
**03.01.2024 Bulletin 2024/01**

(21) Application number: **22759462.9**

(22) Date of filing: **16.02.2022**

(51) International Patent Classification (IPC):
**B32B 5/28** (2006.01)     **B32B 27/08** (2006.01)
**B32B 27/38** (2006.01)

(52) Cooperative Patent Classification (CPC):
**B32B 5/28; B32B 27/08; B32B 27/38**

(86) International application number:
**PCT/JP2022/006227**

(87) International publication number:
**WO 2022/181423 (01.09.2022 Gazette 2022/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.02.2021   JP 2021030600**

(71) Applicant: **NITTO DENKO CORPORATION**
**Ibaraki-shi**
**Osaka 567-8680 (JP)**

(72) Inventors:
• **ENDO Asuka**
  **Ibaraki-shi, Osaka 567-8680 (JP)**
• **SHIMOKAWA Kayo**
  **Ibaraki-shi, Osaka 567-8680 (JP)**
• **OBAN Ryohei**
  **Ibaraki-shi, Osaka 567-8680 (JP)**
• **ISHIGURO Shigeki**
  **Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **SURFACE-MODIFIED MEMBER, COATED OBJECT, PRODUCTION METHOD FOR SURFACE-MODIFIED MEMBER, AND PRODUCTION METHOD FOR COATED OBJECT**

(57)     The present invention relates to a surface-modified member in which a surface-modifying layer is laminated over at least a part of a resin member containing a thermosetting resin and which includes a mixed layer that the resin member and the surface-modifying layer are mixed between the resin member and the surface-modifying layer. The mixed layer has a thickness of 250 nm to 10 μm.

FIG.1

**Description**

Technical Field

The present invention relates to a surface-modified member, a coated article, a method for producing a surface-modified member, and a method for producing a coated article.

Background Art

In recent years, a resin having lightweight and excellent shock resistance is used in a member of transport equipment such as railway vehicles, aircrafts, ships and automobiles, electronic equipment, housing equipment, and the like, and an adherend of various materials is joined to the surface thereof. A coating film having various functions is formed on a resin member.
It is known that when a resin member containing a thermosetting resin such as an epoxy resin or an unsaturated polyester is used outdoors, the resin turns yellow due to sunlight. For example, in an epoxy resin containing bisphenol A type glycidyl ether as a main component, since a benzene ring absorbs ultraviolet light, the resin is oxidized by radicals generated by energy thereof to form a luminophore, which turns the resin yellow (Patent Literature 1).
As a method for preventing yellowing of a resin, a method of adding an ultraviolet absorber or shielding agent to a resin-molded article (Patent Literature 2), a method of applying a weather resistant material on the surface of a resin-molded article (Patent Literature 3), a method of making a resin composition itself of a resin-molded article into a highly weather-resistant material (Patent Literature 4), and the like have been studied.
On the other hand, when a resin member is joined to an adherend such as a metal or other resins, sufficient adhesive strength is required. When coating a resin member with a coating film, various resins are used as a base polymer for the coating film, and it is required to strengthen adhesion between the resin member and the coating film in order to prevent the coating film from peeling off.
However, depending on types of a resin member and an adherend, the resin member and the adherend may not be compatible with an adhesive and sufficient adhesive strength may not be obtained even using a related-art adhesive or adhesive sheet. When a resin member is directly coated, compatibility is poor depending on types of the resin member and a coating film, and sufficient adhesive strength between the resin member and the coating film cannot be obtained, and problems such as unevenness or coating film peeling may occur.
As a resin member having sufficient adhesive strength, for example, Patent Literature 5 describes a surface-modified thermoplastic resin member in which an easy-adhesion layer is laminated over a resin member made of a thermoplastic resin and which includes a mixed layer that the thermoplastic resin and the easy-adhesion layer are mixed between the thermoplastic resin and the easy-adhesion layer.

Citation List

Patent Literature

Patent Literature 1: JP-2005-213337 A
Patent Literature 2: JP-2020-7408 A
Patent Literature 3: JP-2009-505871 A
Patent Literature 4: JP-2008-250106 A
Patent Literature 5: JP-2017-128722 A

Summary of Invention

Technical Problem

However, in the related-art technology, it is not sufficient to prevent yellowing of a coated article coated with a resin member due to outdoor use, and weather resistance and adhesion between the resin member and a coating film are not compatible.
An object of the present invention is to provide a surface-modified member and a coated article having excellent weather resistance and excellent adhesive strength. Another object of the present invention is to provide a method for producing the surface-modified member and a method for producing the coated article. Solution to Problem
The present inventor has made intensive and extensive investigations to solve the above problems. As a result, it has been found that by providing a surface-modified member in which a surface-modifying layer is laminated over at least a part of a resin member containing a thermosetting resin and which includes a mixed layer having a specific thickness that the resin member and the surface-modifying layer are mixed between the resin member and the surface-modifying layer, both improvement in weather resistance and improvement in adhesive strength can be achieved, thereby reaching to complete the present invention.

A means for solving the above problems is as follows.

[1] A surface-modified member in which a surface-modifying layer is laminated over at least a part of a resin member containing a thermosetting resin, the surface-modified member including: a mixed layer that the resin member and the surface-modifying layer are mixed between the resin member and the surface-modifying layer, in which the mixed layer has a thickness of 250 nm to 10 $\mu$m.

[2] The surface-modified member according to [1], in which the surface-modifying layer contains a thermoplastic resin.

[3] The surface-modified member according to [2], in which the thermoplastic resin has a weight average molecular weight of 10000 to 100000.

[4] The surface-modified member according to [2] or [3], in which an HSP distance between the thermoplastic resin and the thermosetting resin is 8 or less.

[5] The surface-modified member according to any one of [2] to [4], in which the thermoplastic resin is a polymer having a polar unit and a nonpolar unit.

[6] The surface-modified member according to any one of [1] to [5], in which the thermosetting resin has an aromatic group.

[7] The surface-modified member according to any one of [1] to [6], in which the thermosetting resin has a benzene ring-containing group.

[8] The surface-modified member according to any one of [1] to [7], in which the thermosetting resin is an epoxy resin.

[9] The surface-modified member according to [8], in which the epoxy resin has a structure derived from bisphenol A type glycidyl ether.

[10] The surface-modified member according to any one of [1] to [9], in which the resin member contains a fiber-reinforced resin.

[11] The surface-modified member according to any one of [1] to [10], in which the surface-modified member has a $\Delta$b* value of 5 or less, as defined by the following equation (1),

$$\Delta b^* \text{ value} = b^*1 - b^*0 \qquad \text{Equation (1)}$$

(in the equation (1), b*0 is a b* value of the surface on the surface-modifying layer-side of the surface-modified member, which is obtained by measuring with light having an incident angle of 45° by a spectrophotometer at a reflection angle of 45° before irradiating the surface-modified member with ultraviolet light at an irradiation intensity of 0.35 W/m$^2$/h, and b*1 is a b* value of the surface on the surface-modifying layer-side of the surface-modified member, which is obtained by measuring with light having an incident angle of 45° by a spectrophotometer at a reflection angle of 45° after irradiating the surface-modified member with ultraviolet light at an irradiation intensity of 0.35 W/m$^2$/h for 250 hours).

[12] A coated article in which a coating film is provided on at least a part of the surface-modified member according to any one of [1] to [11].

[13] The coated article according to [12], in which the coating film is at least one selected from a paint layer, a print layer, a vapor deposition layer, and a plating layer

[14] The coated article according to [12], in which the coating film is a transparent resin layer

[15] A method for producing a surface-modified member in which a surface-modifying layer containing a thermoplastic resin is laminated over at least a part of a resin member containing a thermosetting resin, the method including: a lamination step of laminating the surface-modifying layer over the resin member by heat pressing, in which a cure degree of the thermosetting resin at a start of the heat pressing is 0% to 93%.

[16] A method for producing the coated article according to any one of [12] to [14], including: a lamination step of laminating the surface-modifying layer over the resin member by heat pressing to produce the surface-modified member; and a step of forming the coating film on the surface-modifying layer-side of the surface-modified member, in which a cure degree of the thermosetting resin at a start of the heat pressing is 0% to 93%.

Advantageous Effects of Invention

According to the present invention, a surface-modified member and a coated article having excellent weather resistance and excellent adhesive strength can be provided. A method for producing the surface-modified member and a method for producing the coated article, which are excellent in productivity, can be provided.

Brief Description of Drawings

FIG. 1 is a schematic cross-sectional view showing an example of a surface-modified member.
FIG. 2 is a schematic cross-sectional view showing an example of a surface-modifying layer-provided resin material.
FIG. 3 is a schematic cross-sectional view showing an example of a coated article.

Description of Embodiments

The embodiments of the present invention are described in detail below.

[Surface-modified Member]

A surface-modified member according to an embodiment of the present invention is a surface-modified member in which a surface-modifying layer is laminated over at least a part of a resin member containing a thermosetting resin and which includes a mixed layer that the resin member and the surface-modifying layer are mixed between the resin member and the surface-modifying layer, in which the mixed layer has a thickness of 250 nm to 10 μm.
In the surface-modified member according to the embodiment of the present invention, it is necessary to provide the mixed layer that the resin member having a specific thickness or more and the surface-modifying layer are mixed between the resin member and the surface-modifying layer. In the mixed layer, a concentration of radicals generated by irradiating the thermosetting resin with sunlight decreases. Accordingly, it is presumed that a reaction between the radicals is prevented, and yellowing of the thermosetting resin is prevented.
It is presumed that adhesive strength between the resin member and the surface-modifying layer is improved by formation of the mixed layer, and as a result, adhesion to a coating film can be imparted.
In the surface-modified member according to the embodiment of the present invention, a Δb* value defined by the following equation (1) is preferably 5 or less.

$$\Delta b^* \text{ value} = b^*1 - b^*0 \qquad \text{Equation (1)}$$

(In the equation (1), $b^*0$ is a b* value of the surface on the surface-modifying layer-side of the surface-modified member, which is obtained by measuring with light having an incident angle of 45° by a spectrophotometer at a reflection angle of 45° before irradiating the surface-modified member with ultraviolet light at an irradiation intensity of 0.35 W/m$^2$/h, and $b^*1$ is a b* value of the surface on the surface-modifying layer-side of the surface-modified member, which is obtained by measuring with light having an incident angle of 45° by a spectrophotometer at a reflection angle of 45° after irradiating the surface-modified member with ultraviolet light at an irradiation intensity of 0.35 W/m$^2$/h for 250 hours.)
The Δb* value is preferably 5.15 or less, more preferably 5 or less, and even more preferably 4.5 or less.
Specifically, b*0 and b*1 can be measured by methods described in Examples.

<Surface-modifying Layer>

The surface-modifying layer preferably contains a thermoplastic resin.
A weight average molecular weight (Mw) of the thermoplastic resin is preferably 500 or more, and more preferably 10000 or more, from the viewpoint of not volatilizing at a molding temperature of the thermosetting resin. The weight average molecular weight is preferably 1000000 or less, and more preferably 100000 or less, from the viewpoint of mixing.
The weight average molecular weight of the thermoplastic resin is preferably 10000 to 100000 from the viewpoint of improving compatibility with a thermosetting resin. When the compatibility between the thermosetting resin in the resin member and the thermoplastic resin in the surface-modifying layer is improved, a mixed layer is easily formed in a production process of the surface-modified member to be described later, and a mixed layer having a desired thickness is easily obtained.
In the present invention, the weight average molecular weight (Mw) of the thermoplastic resin is a value in terms of polymethyl methacrylate determined from a calibration curve prepared with standard polystyrene using gel permeation chromatography (GPC). Details of the measurement will be described later in Examples.
The thermoplastic resin contained in the surface-modifying layer may be one kind alone and may be two or more kinds. When two or more kinds of thermoplastic resins are contained, the weight average molecular weight of a thermoplastic resin as a main component is preferably within the above range. The thermoplastic resin as a main component refers to a component contained in an amount of 50 mass% or more with respect to a total amount of the thermoplastic resin contained in the surface-modifying layer.

From the viewpoint of improving the compatibility with the thermosetting resin, an HSP distance between the thermoplastic resin and the thermosetting resin is preferably 8 or less. When the HSP distance is 8 or less, the compatibility between the thermosetting resin in the resin member and the thermoplastic resin in the surface-modifying layer is improved. Thus, a mixed layer is easily formed in a production process of the surface-modified member to be described later, and a mixed layer having a desired thickness is easily obtained.

The HSP distance between the thermoplastic resin and the thermosetting resin is more preferably 8 or less, and even more preferably 5 or less.

A Hansen solubility parameter (hereinafter referred to as an HSP value) and the HSP distance are described below.

The Hansen solubility parameter is represented by a vector obtained by dividing a Hildebrand solubility parameter into three components of a dispersion force ($\delta_D$), a permanent dipole intermolecular force ($\delta_P$), and a hydrogen bonding force ($\delta_H$), and plotting the components in a three-dimensional space. Those with similar vectors can be determined to have high solubility. That is, a similarity degree in solubility can be determined from a distance between the HSP values (an HSP distance). The definition and calculation of Hansen solubility parameters are described in Hansen Solubility Parameters: A Users Handbook by Charles M. Hansen (CRC Press, 2007).

HSP values are known for various resins and solvents, and these may be used as they are, or values calculated using computer software Hansen Solubility Parameters in Practice (HSPiP) may be used. The HSPiP also includes a database of resins and solvents.

In the present description, the HSP value of a resin is calculated using the HSPiP according to the following procedure using a Hansen sphere method. An estimation method using a neural network method called Y-MB implemented in the HSPiP is used. At this time, as for a molecular structure, a Smiles equation for a molecular linear notation is input, $\delta_D$, $\delta_P$, and $\delta_H$ are calculated and three-dimensionally plotted, and a Hansen sphere is obtained from these coordinates. A center coordinate of the Hansen sphere is an HSP value of a resin to be evaluated.

An HSP distance Ra between a thermosetting resin (HSP values: $\delta_{D1}$, $\delta_{P1}$, and $\delta_{H1}$) and a thermoplastic resin (HSP values: $\delta_{D2}$, $\delta_{P2}$, and $\delta_{H2}$) can be calculated by an equation (3).

$$\mathrm{Ra} = \{4 \times (\delta_{D1} - \delta_{D2})^2 + (\delta_{P1} - \delta_{P2})^2 + (\delta_{H1} - \delta_{H2})^2\}^{1/2} \qquad (3)$$

(In the equation (3), $\delta_{D1}$ represents a dispersion force of the thermosetting resin, $\delta_{P1}$ represents a permanent dipole intermolecular force of the thermosetting resin, $\delta_{H1}$ represents a hydrogen bonding force of the thermosetting resin, $\delta_{D2}$ represents a dispersion force of the thermoplastic resin, $\delta_{P2}$ represents a permanent dipole intermolecular force of the thermoplastic resin, and $\delta_{H2}$ represents a hydrogen bonding force of the thermoplastic resin.)

When two or more kinds of thermoplastic resins are contained in the surface-modifying layer, an HSP distance between a thermoplastic resin as a main component and a thermosetting resin is preferably within the above range.

The thermoplastic resin is preferably a polymer having a polar unit and a nonpolar unit.

That is, the thermoplastic resin contained in the surface-modifying layer (which may be a material of the surface-modifying layer) more preferably has a nonpolar unit and a polar unit containing a polar group. A content ratio of the thermoplastic resin in the surface-modifying layer is preferably 50 mass% to 100 mass%, more preferably 70 mass% to 100 mass%, even more preferably 90 mass% to 100 mass%, particularly preferably 92 mass% to 100 mass%, and most preferably 95 mass% to 100 mass%.

Examples of the nonpolar unit in the thermoplastic resin include a polyethylene unit, a polypropylene unit, and a polystyrene unit. The nonpolar unit may be one kind alone and may be two or more kinds.

Examples of the polar unit containing a polar group in the thermoplastic resin include an epoxy group, a carboxy group, a nitrile group, an amide group, an ester group, a hydroxy group, an acid anhydride, and a silanol group. Examples of the polar unit containing such a polar group include a glycidyl methacrylate unit, a vinyl acetate unit, an acrylonitrile unit, an amide unit, a (meth)acrylate unit, a hydroxyethyl (meth)acrylate unit, and a maleic anhydride unit. The polar unit may be one kind alone and may be two or more kinds.

The thermoplastic resin that may be contained in the surface-modifying layer (which may be a material of the surface-modifying layer) may be at least one selected from a methoxymethyl group-containing polymer, a hydroxy group-containing polymer, a carboxy group-containing polymer, an amino group-containing polymer, and an amide group-containing polymer.

As the methoxymethyl group-containing polymer, any appropriate methoxymethyl group ($-CH_2-OCH_3$)-containing polymer can be used to the extent that the effects of the present invention are not impaired. Examples of such a methoxymethyl group-containing polymer include a methoxymethyl group-containing polyamide resin.

As the methoxymethyl group-containing polymer, a commercially available product may be used. Examples of such a commercially available product include "Fine Resin" (registered trademark) series (manufactured by Namariichi Co., Ltd).

The methoxymethyl group-containing polymer may be one kind alone and may be two or more kinds.

As the hydroxy group-containing polymer, any appropriate hydroxy group (-OH)-containing polymer can be used to the extent that the effects of the present invention are not impaired. Examples of such a hydroxy group-containing polymer include a hydroxy group-containing acrylic polymer.

As the hydroxy group-containing polymer, a commercially available product may be used. Examples of such a commercially available product include "ARUFON (registered trademark) UH-2000 series" (manufactured by Toagosei Co., Ltd.).

The hydroxy group-containing polymer may be one kind alone and may be two or more kinds.

As the carboxy group-containing polymer, any appropriate carboxy group (-COOH)-containing polymer can be used to the extent that the effects of the present invention are not impaired. Examples of such a carboxy group-containing polymer include a carboxy group-containing acrylic polymer.

As the carboxy group-containing polymer, a commercially available product may be used. Examples of such a commercially available product include "ARUFON (registered trademark) UC-3000 series" and "ARUFON (registered trademark) UC-3510 series" (manufactured by Toagosei Co., Ltd.).

The carboxy group-containing polymer may be one kind alone and may be two or more kinds.

As the amino group-containing polymer, any appropriate amino group ($-NH_2$)-containing polymer can be used to the extent that the effects of the present invention are not impaired.

As the amino group-containing polymer, a commercially available product may be used.

The amino group-containing polymer may be one kind and may be two or more kinds.

The surface-modifying layer (which may be a material of the surface-modifying layer) may contain at least one selected from tertiary amine-containing compounds and strong acids.

As the tertiary amine-containing compound, any appropriate tertiary amine-containing compound can be used to the extent that the effects of the present invention are not impaired. Examples of the tertiary amine-containing compound include an imidazole derivative and a polyethyleneimine.

As the tertiary amine-containing compound, a commercially available product may be used. Examples of such a commercially available product include "CUREZOL" series (an imidazole epoxy resin curing agent, manufactured by Shikoku Chemicals Corporation) as an imidazole derivative, and "EPOMIN" (registered trademark) series (manufactured by Nippon Shokubai Co., Ltd.) as a polyethyleneimine.

The tertiary amine-containing compound may be one kind and may be two or more kinds.

As the strong acid, any appropriate strong acid can be used to the extent that the effects of the present invention are not impaired. Examples of such a strong acid include trifluoroborane, an ionic liquid, and Nafion.

Examples of the ionic liquid include $BF_3$-$C_2H_5NH_2$, and HMI-$PF_6$.

As the strong acid, a commercially available product may be used.

The strong acid may be one kind and may be two or more kinds.

As the amide group-containing polymer, any appropriate amide group ($-CO-NH_2$)-containing polymer can be used to the extent that the effects of the present invention are not impaired. Examples of such an amide group-containing polymer include a polyamide copolymer resin.

As the amide group-containing polymer, a commercially available product may be used. Examples of such a commercially available product include "AMILAN CM8000" (manufactured by Toray Industries, Inc.).

The amide group-containing polymer may be one kind and may be two or more kinds.

The surface-modifying layer (which may be a material of the surface-modifying layer) may contain other polymer components to the extent that the effects of the present invention are not impaired.

The surface-modifying layer (which may be a material of the surface-modifying layer) may further contain a crosslinking agent, fine particles, an organic component, or the like as an additive.

A thickness of the surface-modifying layer is not particularly limited, and is 0.01 $\mu$m to 2000 $\mu$m, more preferably 0.1 $\mu$m to 1000 $\mu$m, even more preferably 0.5 $\mu$m to 500 $\mu$m, and particularly preferably 1 $\mu$m to 200 $\mu$m.

<Resin Member>

The surface-modified member according to the present embodiment includes a resin member containing a thermosetting resin.

The resin member is obtained by molding a resin material containing a thermosetting resin.

Examples of the thermosetting resin contained in the resin member (which may be a resin material) include an unsaturated polyester resin, a vinyl ester resin, an epoxy resin, a melamine resin, a phenol resin, a urethane resin, a polyisocyanate resin, a polyisocyanurate resin, and a polyimide resin.

The thermosetting resin preferably has an aromatic group, and more preferably has a benzene ring-containing group since the effect of preventing yellowing according to the present invention is easily obtained.

From the same viewpoint, the thermosetting resin is preferably an epoxy resin, and is preferably an epoxy resin having a structure derived from bisphenol A type glycidyl ether.

The resin member may contain a fiber-reinforced resin, and the thermosetting resin may be a fiber-reinforced thermosetting resin.

Examples of the fiber-reinforced thermosetting resin include a carbon fiber-reinforced cured plastic resin and a glass fiber-reinforced thermosetting resin.

The resin material may be a prepreg. That is, the resin member may be a member formed by curing a prepreg.

Here, the prepreg is obtained by impregnating a reinforcing material such as a carbon fiber or a glass fiber with a resin with an additive such as a curing agent mixed, and heating or drying the resin into a semi-cured state.

Examples of the shape of the resin material and the resin member include a plate shape having a flat surface, a plate shape having a curved surface, a sheet shape, and a film shape.

A thickness of the resin material and the resin member is, for example, preferably 0.001 mm or more, more preferably 0.1 mm or more, and even more preferably 1 mm or more, from the viewpoint of the rigidity of a molded article. The thickness is preferably 50 mm or less, more preferably 10 mm or less, and even more preferably 5 mm or less, from the viewpoint of weight reduction and material cost.

In the surface-modified member according to the embodiment of the present invention, the surface-modifying layer is laminated over at least a part of the resin member containing the thermosetting resin. Here, "at least a part of the resin member" means at least a part in the entire surface of the resin member. For example, when the resin member is a plate shape, a sheet shape or a film shape, the term means a part of at least one surface, the whole of at least one surface, and the like.

<Mixed Layer>

The mixed layer is a layer that the resin member and the surface-modifying layer are mixed, and is, for example, a layer of a mixed part obtained by providing the surface-modifying layer on at least a part of the surface of the resin material, followed by heating and molding them to have the interfaces of the surface-modifying layer and the resin material melted and contacted to each other so that those are welded and mixed. By forming the mixed layer having a predetermined thickness or more, the effect of preventing yellowing of the thermosetting resin is obtained, and the adhesive strength between the resin member and the surface-modifying layer is improved. By mixing at the interfaces, the interfaces of the resin member and the surface-modifying layer disappear, thus the resin member and the surface-modifying layer are integrated, and excellent adhesive strength is obtained.

A thickness of the mixed layer is 250 nm to 10 $\mu$m. When the thickness of the mixed layer is 250 nm or more, a concentration of radicals generated from the thermosetting resin by irradiation with sunlight decreases in the mixed layer, a reaction between the radicals is prevented, and thus yellowing of the thermosetting resin can be prevented. Since the adhesive strength between the resin member and the surface-modifying layer is improved, the coating film adhesion is obtained. When the thickness of the mixed layer is 10 $\mu$m or less, a decrease in coating adhesion due to cohesive failure of the surface-modifying layer can be prevented.

The thickness of the mixed layer is preferably 250 nm or more, more preferably 300 nm or more, and even more preferably 400 nm or more, from the viewpoint of preventing yellowing. The thickness is preferably 10 $\mu$m or less, more preferably 5 $\mu$m or less, and even more preferably 3 $\mu$m or less, from the viewpoint of preventing a decrease in coating adhesion.

In the present invention, the thickness of the mixed layer is obtained by performing mapping measurement by microscopic Raman spectroscopy analysis on the cross section of the surface-modified member, and measuring using a layer in which peaks derived from both the thermosetting resin in the resin member and the thermoplastic resin in the surface-modifying layer are detected as the mixed layer. Details of the measurement will be described later in Examples.

The thickness of the mixed layer can be appropriately determined according to the conditions of the heat molding and the types of the resin member and the surface-modifying layer. Particularly, the thickness of the mixed layer can be adjusted by adjusting the cure degree of the thermosetting resin in the resin material before the start of a heat pressing step in a method for producing a surface-modified member to be described later.

[Method of Producing Surface-modified Member]

The surface-modified member according to the embodiment of the present invention is obtained by heat-molding a laminate (hereinafter, referred to as a surface-modifying layer-provided resin material) in which a surface-modifying layer is laminated on at least a part of the surface of a resin material.

By heat-molding the surface-modifying layer-provided resin material, the thermoplastic resin contained in the surface-modifying layer is melted and mixed with the thermosetting resin contained in the resin material, whereby the interfaces of the surface-modifying layer and the resin material are melted and contacted to each other so that those are welded and mixed to form a mixed layer, thereby forming a surface-modified member.

The heat molding may be performed simultaneously with placing a surface-modifying sheet, or may be performed after placing a surface-modifying sheet.

<Method for Producing Surface-modifying Layer-provided Resin Material>

Examples of a method for producing the surface-modifying layer-provided resin material include a method in which a solution containing a material of a surface-modifying layer and a solvent is applied to at least a part of the surface of a resin material, a method in which a surface-modifying layer is melted and extruded to at least a part of the surface of a resin material, and a method in which a sheet-shaped surface-modifying layer is laminated on at least a part of the surface of a resin material.

"At least a part of the surface of a resin material" means at least a part in the entire surface of a resin material. For example, when the resin material has a plate shape, a sheet shape, or a film shape, it means at least a part of one surface or at least the entire one surface.

The above descriptions can be applied to the resin material, and the surface-modifying layer as they are.

Examples of a method of applying a solution containing a material of a surface-modifying layer and a solvent according to the embodiment of the present invention include dipping of a resin material into a solution containing a material of a surface-modifying layer and a solvent, fluffing of a solution containing a material of a surface-modifying layer and a solvent to at least a part of the surface of a resin material, applying of a solution containing a material of a surface-modifying layer and a solvent to at least a part of the surface of a resin material with various coaters, and spray applying of a solution containing a material of a surface-modifying layer and a solvent to at least a part of the surface of a resin material.

Examples of the solution containing a material of a surface-modifying layer and a solvent include a surface-modifying composition obtained by dissolving a material of a surface-modifying layer in any appropriate solvent to the extent that the effects of the present invention are not impaired.

Examples of the solvent include water; alcohols such as methanol, ethanol or isopropyl alcohol (IPA); ketones such as methyl ethyl ketone; esters; aliphatic, alicyclic and aromatic hydrocarbons; halogenated hydrocarbons; amides such as methyl formamide; sulfoxides such as dimethyl sulfoxide; and ethers such as dimethyl ether or tetrahydrofuran. In order to prevent the formation of a gelation product, ethanol or a mixed solvent of ethanol, isopropyl alcohol, and water is preferred. The solvent may be one kind alone and may be two or more kinds.

A solid content concentration in the surface-modifying composition can be appropriately set depending on the purpose. A mass ratio is preferably 1 mass% to 40 mass%, more preferably 10 mass% to 35 mass%, and even more preferably 15 mass% to 30 mass%, from the viewpoint of the thickness accuracy of the surface-modifying layer.

The surface-modifying composition may contain various additives such as a pH regulator, a crosslinking agent, a viscosity modifier (a thickener, or the like), a leveling agent, a peel controlling agent, a plasticizer, a softener, a filler, a coloring agent (a pigment, a dye, or the like), a surfactant, an antistatic agent, a preservative, an age resister, an ultraviolet absorber, an antioxidant and a light stabilizer, as necessary.

For example, by adding a coloring agent, the surface-modifying layer becomes visible, making it easier to determine whether the surface of the resin member has already been modified, which is advantageous in terms of process control.

Examples of the coloring agent include dyes and pigments. The coloring agent may be a fluorescent material visible under black light.

When the solution containing a material of a surface-modifying layer and a solvent is applied to at least a part of the surface of the resin material, at least a part of the solvent is then removed by drying. In such drying, at least a part of the solvent may be removed, and it is preferred that 50 mass% or more of the solvent is removed, more preferred that 80 mass% or more of the solvent is removed, even more preferred that 90 mass% or more of the solvent is removed, particularly preferred that 95 mass% or more of the solvent is removed, and most preferred that all solvent is removed.

As the drying method, any appropriate method may be used as long as it is a method capable of removing the solvent, such as oven heating, infrared radiation heating, or high-frequency heating, to the extent that the effects of the present invention are not impaired. As a drying temperature, any appropriate temperature may be appropriately set according to a boiling point of a solvent to be used.

Examples of a method of melting and extruding the surface-modifying layer include a method of melting and extruding a material of a surface-modifying layer to at least a part of the surface of a resin material using a melt extruder or the like.

Examples of a method of laminating a sheet-shaped surface-modifying layer include a method of placing the surface-modifying layer-side of a surface-modifying sheet, which is a laminate of a release sheet and a surface-modifying layer, on at least a part of the surface of a resin material.

Hereinafter, the surface-modifying sheet will be described. The surface-modifying sheet is a laminate of a release sheet and a surface-modifying layer. The release sheet is not particularly limited, and preferably has heat resistance of 100°C or higher. The release sheet may be a non-silicone resin sheet or may be a silicone resin sheet, and is preferably a non-silicone resin sheet. Examples thereof include a fluorine resin sheet film (NITOFLON, manufactured by Nitto Electric Corporation), a polyester resin sheet, a polymethyl pentene resin sheet (OPULENT (registered trademark), manufactured by Mitsui Chemicals Tohcello Inc.), a polystyrene resin sheet (Oidys (registered trademark), manufactured by Kurabo Industries Ltd.), a polyamide resin sheet, and a polyolefin resin sheet.

More specific examples of the release sheet that can be used for the surface-modifying sheet include unstretched polyamide 6, unstretched polyamide 66, biaxially stretched polyamide 6, biaxially stretched polyamide 66, biaxially stretched polypropylene, biaxially stretched polyethylene terephthalate, biaxially stretched polybutylene terephthalate, easily molded polyethylene terephthalate, cast molded polytetrafluoroethylene, an unstretched extruded tetrafluoroethylene-ethylene copolymer (ETFE), an unstretched extruded tetrafluoroethylene-perfluoroalkoxyethylene copolymer (PFA), an unstretched extruded tetrafluoroethylene-hexafluoropropylene copolymer (FEP), and a laminate having these as a main layer

A thickness of the release sheet is preferably 1 $\mu$m to 1000 $\mu$m, more preferably 10 $\mu$m to 500 $\mu$m, even more preferably 20 $\mu$m to 300 $\mu$m, and particularly preferably 30 $\mu$m to 100 $\mu$m, from the viewpoint of shape conformability.

If necessary, the surface on the surface-modifying layer-side of the release sheet or both surfaces of the release sheet may be subjected to a release treatment with an appropriate release treatment agent such as silicone.

The surface-modifying sheet can be produced by any appropriate method. Examples of the method include a method of dipping a release sheet in a solution (a surface-modifying composition) containing a material of a surface-modifying layer and a solvent and then drying as necessary, a method of brushing a solution containing a material of a surface-modifying layer and a solvent to the surface of a release sheet and then drying as necessary, a method of applying a solution containing a material of a surface-modifying layer and a solvent to the surface of a release sheet by various coaters and then drying as necessary, and a method of spray coating a solution containing a material of a surface-modifying layer and a solvent to the surface of a release sheet and then drying as necessary.

The above descriptions can be applied to the surface-modifying layer and the surface-modifying composition as they are.

In the method for producing a surface-modified member according to the embodiment of the present invention, it is preferred to produce a surface-modifying layer-provided resin material using a surface-modifying sheet.

In the surface-modifying sheet, the surface-modifying layer is a sheet shape. Thus, the surface-modifying layer is not applied to the surface of a resin member, but can be placed on the resin material, followed by heat-treating to be integrally molded with the resin member. Therefore, this prevents occurrence of unevenness due to generation of cissing, and can provide the surface-modifying layer in a uniform thickness on the surface of a resin member. Various surface treatments such as a sand blasting treatment, a corona treatment, and a plasma treatment as a pretreatment and a drying step are not required.

By heat-molding the surface-modifying layer-provided resin material obtained by such a method and performing a surface treatment for the resin member, a mixed layer is formed, and not only the effect of preventing yellowing and sufficient adhesive strength can be imparted to the resin member, but also the surface-modified member can be produced with high productivity and low cost. The method for producing a surface-modified member may be a method for treating the surface of a resin member (a surface treatment method of a resin member).

<Heat-molding of Surface-modifying Layer-provided Resin Material>

The method for producing a surface-modified member according to the embodiment of the present invention may include a step of heat-molding the above-described surface-modifying layer-provided resin material.

In the production of the surface-modified member, when a curing temperature of a thermosetting resin contained in a resin member is set to $T_2$°C, it is preferred that a surface-modifying layer is provided on at least a part of the surface of a resin material containing the thermosetting resin, and heat molding is performed at a temperature of $T_1$°C or higher The curing temperature is a temperature within an exothermic temperature range of a heat flow curve measured by DSC for an uncured thermosetting resin.

The heat molding temperature is preferably $T_1$°C to $T_3$°C, more preferably $(T_1+10)$°C to $(T_3-10)$°C, and more preferably $(T_1+20)$°C to $(T_3-20)$°C.

Here, $T_1$ is a temperature (°C) at which heat generation starts when an uncured thermosetting resin is measured by DSC, and $T_3$ is a temperature (°C) at which heat generation ends.

By performing the surface treatment for the resin member by the method as described above at a heat molding temperature within the above range, the interfaces of the surface-modifying layer and the resin member are melted and contacted to each other so that those are welded and mixed to form a mixed layer, and thus the resin member can be provided with an effect of preventing yellowing and sufficient adhesive strength.

After at least a part of the surface of the resin member is melted or softened, a surface-modifying layer may be provided on the surface of the resin member in a melted or softened state. By providing the surface-modifying layer on the surface of the resin member in the molten or softened state, the surface-modifying layer is welded and mixed by the heat on the surface of the resin member, and sufficient adhesive strength can be imparted to the resin member.

The "molten state" is a state in which at least a part of the surface of the resin member is melted, and is preferably formed by heating the resin member to a temperature equal to or higher than a melting point thereof.

The "softened state" is a state in which at least a part of the surface of the resin member is softened, and is preferably formed by heating the resin member to a temperature equal to or higher than a softening temperature thereof.

Examples of the heat molding method include oven heating, infrared radiation heating, high-frequency heating, and heat pressing. Resin molding is preferred, and heat pressing (press molding) is more preferred.

A heat molding time is preferably 1 second or more, and may be 1 minute or more. The heat molding time is preferably 120 minutes or less, more preferably 60 minutes or less, even more preferably 30 minutes or less, and still more preferably 15 minutes or less.

The heat pressing is, for example, a mode in which a surface-modifying layer-provided resin material is placed in a molding machine (for example, a press machine), and a molding process accompanied by heating (for example, integral molding by heat pressing) is performed.

The heat pressing is preferably a mode in which the surface-modifying layer-side of a surface-modifying sheet is placed on at least a part of the surface of a resin material in a molding machine, and integral molding is performed by heat pressing. According to such a mode, both the surface treatment of the resin member and the molding process of the resin member can be simultaneously performed, so that high productivity and low cost can be provided.

A molding pressure during the press molding is preferably 1 MPa or more, more preferably 2 MPa or more, and even more preferably 3 MPa or more, from the viewpoint of further deforming a molded article by a mold. The molding pressure is preferably 30 MPa or less, more preferably 20 MPa or less, and even more preferably 10 MPa or less, from the viewpoint of maintaining a resin amount of the molded article.

The method for producing a surface-modified member according to the embodiment of the present invention is a method for producing a surface-modified member in which a surface-modifying layer containing a thermoplastic resin is laminated over at least a part of a resin member containing a thermosetting resin, and includes a lamination step of laminating the surface-modifying layer over the resin member by heat pressing, in which a cure degree of the thermosetting resin in the resin material at the start of the heat pressing is 0% to 93%.

By setting the cure degree of the thermosetting resin at the start of the heat pressing (which may be before the pressing by the heat pressing) to 0% to 93%, an increase in molecular weight of the thermosetting resin can be prevented, and thus the compatibility with the thermoplastic resin in the surface-modifying layer is improved. When the compatibility with the thermoplastic resin is improved, a mixed layer is easily formed by heat pressing, and a mixed layer having a desired thickness is easily obtained.

In the present description, the cure degree of the thermosetting resin is obtained by performing differential scanning calorimetry (DSC) for an uncured thermosetting resin and a thermosetting resin at the start of heat pressing, obtaining a generated heat amount (A) of the uncured thermosetting resin and a generated heat amount (B) of the thermosetting resin at the start of the heat pressing from a heat flow curve obtained in the heating process, separately, and calculating the cure degree by the following equation (2).

$$\text{Cure degree (\%)} = (1 - B/A) \times 100 \quad (2)$$

Details of the measurement will be described later in Examples.

The cure degree is preferably 0% or more. The cure degree is preferably 93% or less, and more preferably 75% or less, from the viewpoint of preventing an increase in molecular weight of the thermosetting resin.

When performing the molding process of a resin by heat pressing, it is general to provide a step of preheating a resin material before the heat pressing, and to perform the heat pressing after sufficiently heating the resin material.

However, in the method for producing a surface-modified member according to the embodiment of the present invention, it is preferred not to have a preheating process, or it is preferred to shorten the preheating time or lower the preheating temperature in the preheating process in order to make the cure degree of the thermosetting resin at the start of heat pressing 0% to 93%.

In the method for producing a surface-modified member according to the embodiment of the present invention, the preheating temperature in the case where the preheating step is provided before the pressing step by the heat pressing can be the above-described heat molding temperature, and the preferred temperature range is also the same.

It is preferred that the method for producing a surface-modified member according to the embodiment of the present invention is a method for producing a surface-modified member using a surface-modifying sheet, and includes a lamination step of placing the surface-modifying layer-side of the surface-modifying sheet on at least a part of the surface of a resin material and laminating the surface-modifying layer over the resin member by heat pressing, in which a cure degree of a thermosetting resin at the start of the heat pressing is 0% to 93%.

The heat pressing may be performed simultaneously with placing a surface-modifying sheet, or may be performed after placing a surface-modifying sheet.

The surface-modifying layer-side of a surface-modifying sheet, which is a laminate of a release sheet and a surface-modifying layer, is placed on at least a part of the surface of a resin member, and after heat pressing, the release sheet is preferably removed. By removing the release sheet in this manner, the surface-modifying layer is transferred to the surface of the resin member, and thus the surface-modified member is obtained.

A surface-modified member including a surface-modifying layer on the surface thereof is obtained by peeling off the release sheet from the surface-modified member. Peeling off the release sheet is not particularly limited, and may be performed manually, or may be performed by using dedicated peeling equipment, or the like.

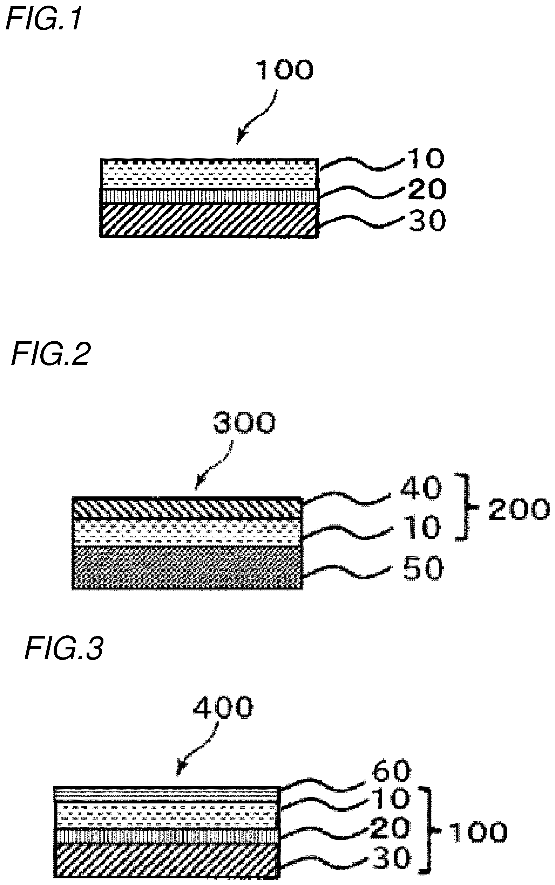

According to the above production method, as shown in FIG. 1, a surface-modified member 100 in which a surface-modifying layer 10 is provided on the surface of a resin member 30, and which includes a mixed layer 20 that the resin member and the surface-modifying layer are mixed between the resin member 30 and the surface-modifying layer 10 is obtained.

A preferred embodiment of the method for producing a surface-modified member according to the embodiment of the present invention is a method using a surface-modifying sheet. The embodiment that the surface-modifying layer-side of a surface-modifying sheet 200, which is a laminate of a release sheet 40 and the surface-modifying layer 10, is placed on at least a part of the surface of the resin material is an embodiment that the surface-modifying sheet 200 is placed on the surface of the resin material 50 such that the surface-modifying layer-side 10 of the surface-modifying sheet 200 is the surface-side of the resin material 50, as shown in FIG. 2.

[Coated Article and Method for Producing Coated Article]

The coated article according to the embodiment of the present invention is an article in which a coating film is provided on at least a part of a surface-modified member. The coating film is preferably provided on at least a part of the surface on the surface-modifying layer-side of the surface-modified member. The coating film may be at least one selected from a paint layer, a print layer, a vapor deposition layer, and a plating layer.

As an example of the coated article according to the embodiment of the present invention, a coated article 400 in which a coating film 60 is provided on the surface on the surface-modifying layer-side of the surface-modified member 100 in which the surface-modifying layer 10 is provided on the surface of the resin member 30 and which includes a mixed layer 20 that the resin member and the surface-modifying layer are mixed between the resin member 30 and the surface-modifying layer 10 is shown in FIG. 3.

When the surface-modifying layer is formed using a sheet-shaped surface-modifying sheet instead of being applied to the surface of the member, the occurrence of unevenness due to cissing or the like can be prevented. Therefore, the surface-modifying layer can be formed with a uniform thickness on the surface of the resin member, and the coating film can be applied with a uniform thickness.

By providing the surface-modifying layer on the surface of the resin member in the molten state or the softened state, the surface-modifying layer is welded and mixed by heat on the surface of the resin member, a mixed layer that the resin member and the surface-modifying layer are mixed is formed between the resin member and the surface-modifying layer, and the adhesive strength between the surface-modifying layer and the resin member is increased, so that a coating film having excellent adhesion can be formed. Further, since the surface-modifying layer and the resin member can be integrally molded when forming a coated article, a cleaning treatment step or a polishing treatment step using an organic solvent for removing the release agent before forming the coating film is not necessary, and safety is excellent, and the environmental load and the work load can be reduced.

The coating film is not particularly limited, and examples thereof include various coating films such as an epoxy type, a polyester-melamine type, an alkyd-melamine type, an acryl-melamine type, an acrylurethane type, and an acryl-polyacid curing agent type.

The coating film may be a transparent resin layer, and examples thereof include a clear paint and a resin layer made of a transparent resin such as a hard coat layer.

A thickness of the coating film is not particularly limited, and is 0.01 $\mu$m to 2000 $\mu$m, more preferably 0.1 $\mu$m to 1000 $\mu$m, even more preferably 0.5 $\mu$m to 500 $\mu$m, and particularly preferably 1 $\mu$m to 200 $\mu$m.

A method of producing a coated article according to the embodiment of the present invention includes: a lamination step of laminating a surface-modifying layer over a resin member by heat pressing to produce a surface-modified member; and a step of forming a coating film on the surface-modifying layer-side of the surface-modified member, in which a cure degree of a thermosetting resin at the start of the heat pressing is 0% to 93%.

The coating method of the coating film is not particularly limited, and a general method such as brush coating, roller coating, spray coating or coating with various coaters can be used. A coating amount is not particularly limited. A time and temperature for heating the coating film, and the like can be appropriately determined by a paint to be used, a coating amount, and the like.

The above descriptions can be applied to the surface-modifying layer, the resin member, the resin material, and the surface-modified member as they are.

[Process Management Method]

In the production of the surface-modified member and the coated article according to the embodiment of the present invention, for example, when the surface-modifying composition or the surface-modifying layer contains an additive such as a dye, a pigment, or a crystalline substance, the surface-modifying layer is visualized and the production process is easily managed.

The above description can be applied to the surface-modifying composition, the coated article, and the additive as they are.

Examples of the process management method include a method of visually checking a portion colored by a surface treatment, and a method of recognizing and determining an image captured by a camera. Example

The present invention is specifically described below by reference to Examples, but it should be understood that the present invention is not construed as being limited to those Examples.

<Measurement of Mixed Layer Thickness>

Cross-section adjustment of a surface-modified member obtained in each of Examples and Comparative Examples was performed by an FIB microsampling method, and mapping measurement by microscopic Raman spectroscopy analysis was performed on the cross section under the following conditions. A layer in which both peaks (822 cm$^{-1}$, 3064 cm$^{-1}$) derived from an epoxy resin which is a thermosetting resin in a resin member and peaks (1441 cm$^{-1}$, 2921 cm$^{-1}$) derived from a polyamide resin which is a thermoplastic resin in a surface-modifying layer, or peaks (1730 cm$^{-1}$) derived from an acrylic resin appeared was defined as a mixed layer. A thickness of the mixed layer was measured with attached software (project five).

Apparatus: alpha 300 RSA manufactured by WITec
Excitation wavelength: 532 nm
Measurement wavenumber range: about 200 cm$^{-1}$ to 3600 cm$^{-1}$
Grating :600 gr/mm
Object lens: × 100
Detector: EMCCD

<Film Thickness of Surface-modifying Layer>

A film thickness of the surface-modifying layer was measured by a dial gauge (GC-9 manufactured by Peacock. A thickness of the surface-modifying sheet was measured, a thickness ($\mu$m) of a release sheet from which the surface-modifying layer was removed at that location was measured, and a difference was defined as a thickness ($\mu$m) of the surface-modifying layer. An average thickness ($\mu$m) is an average value obtained by measuring 10 points.

<Weight Average Molecular Weight of Thermoplastic Resin>

A weight average molecular weight (Mw) of the thermoplastic resin was a value in terms of polymethyl methacrylate determined from a calibration curve prepared with standard polystyrene using gel permeation chromatography (GPC).

(Measurement Conditions of Weight Average Molecular Weight (Mw))

Apparatus name: HLC-8420GPC, manufactured by Tosoh Corporation
Test piece concentration: 1 mg/mL
Test piece injection amount: 20 $\mu$l
Eluent: HFIP+10 mM-CF$_3$COONa
Flow rate: 0.300 ml/min

Measurement (column) temperature: 40°C
Column: test piece column; TSKgel Super AWM-H (two columns), reference column; TSKgel SuperH-RC (one column), manufactured by Tosoh Corporation
Detector: differential refractometer (RI)

<HSP Distance Between Thermoplastic Resin and Thermosetting Resin>

An estimation method using a neural network method called Y-MB implemented in HSP value calculation software (HSPiP Ver. 4.1.0.7 (Hansen Solubility Parameters in Practice)) was used. At this time, as for a molecular structure, a Smiles equation for a molecular linear notation is input, HSP values ($\delta_{D1}$, $\delta_{P1}$, and $\delta_{H1}$) of a thermosetting resin and HSP values ($B_{D2}$, $\delta_{P2}$, and $\delta_{H2}$) of a thermoplastic resin were obtained, separately.
The HSP distance Ra was calculated by an equation (3).

$$Ra = \{4 \times (\delta_{D1} - \delta_{D2})^2 + (\delta_{P1} - \delta_{P2})^2 + (\delta_{H1} - \delta_{H2})^2\}^{1/2} \quad (3)$$

(In the equation (3), $\delta_{D1}$ represents a dispersion force of the thermosetting resin, $\delta_{P1}$ represents a permanent dipole intermolecular force of the thermosetting resin, $\delta_{H1}$ represents a hydrogen bonding force of the thermosetting resin, $\delta_{D2}$ represents a dispersion force of the thermoplastic resin, $\delta_{P2}$ represents a permanent dipole intermolecular force of the thermoplastic resin, and $\delta_{H2}$ represents a hydrogen bonding force of the thermoplastic resin.)

<Cure Degree of Thermosetting Resin>

The cure degree of the thermosetting resin is obtained by performing differential scanning calorimetry (DSC) measurement for an uncured thermosetting resin and a thermosetting resin at the start of heat pressing, obtaining a generated heat amount (A) of the uncured thermosetting resin and a generated heat amount (B) of the thermosetting resin at the start of heat pressing from an exothermic peak area of a heat flow curve obtained in the heating process, separately, and calculating the cure degree by the following equation (2).

$$\text{Cure degree (\%)} = (1 - B/A) \times 100 \quad (2)$$

As a measurement sample, an unheated product obtained by cutting out 5 mg of the thermosetting resin used for the preparation of the surface-modified member and a heated product heated under preheating conditions (a preheating temperature and a preheating time) corresponding to the start of the heat pressing in each of Examples and Comparative Examples were used, separately.

Apparatus: high sensitivity DSC Q2000 manufactured by TA Instruments
Atmospheric gas: $N_2$ (50 ml/min)
Temperature increase rate: 10°C/min
Temperature condition: -30°C→300°C

[Evaluation]

<Weather Resistance Test>

The release sheet of the surface-modified member obtained in each of Examples and Comparative Examples was peeled off, and irradiated with ultraviolet light under the following conditions.
Solutions each having a solid content of 20 mass%, which are obtained by dissolving a Santomo Ti primer as a primer in the case of Comparative Example 2 and CM8000/UC3510 (100/2) in the case of Comparative Example 3 in (a mixed solvent of ethanol (EtOH))/water/isopropyl alcohol (IPA) = 68 mass%/12 mass%/20 mass%) were applied to press-molded laminates in Comparative Examples 2 and 3, and the obtained surface-modified members were used.

(Ultraviolet Irradiation Conditions)

Apparatus: xenon weather meter ATLAS Ci4000 manufactured by DJK

Panel temperature: 85°C
Irradiation intensity: 0.35 W/m$^2$/hr (340 nm in terms of wavelength)
Humidity: 5% RH
Evaluation time: 250 hours

With respect to the surface-modified member before irradiation with the ultraviolet light and the surface-modified member after irradiation with the ultraviolet light, b*1 and b*0 were separately measured using a polygonal spectrophotometer (product name: polygonal spectrophotometer MA98 manufactured by X-rite), and a Δb* value was calculated by the following equation (1).

$$\Delta b^* \text{ value} = b^*1 - b^*0 \qquad \text{Equation (1)}$$

(In the equation (1), b*0 is a b* value of the surface on the surface-modifying layer-side of the surface-modified member, which is obtained by measuring with light having an incident angle of 45° by a spectrophotometer at a reflection angle of 45° before irradiating the surface-modified member with ultraviolet light at an irradiation intensity of 0.35 W/m$^2$/h, and b*1 is a b* value of the surface on the surface-modifying layer-side of the surface-modified member, which is obtained by measuring with light having an incident angle of 45° by a spectrophotometer at a reflection angle of 45° after irradiating the surface-modified member with ultraviolet light at an irradiation intensity of 0.35 W/m$^2$/h for 250 hours.)

A case where the Δb* value, which is a change amount in b* value, was 5 or less was evaluated as having an effect of preventing yellowing (A), and a case where the Δb* value exceeded 5 was evaluated as having no effect of preventing yellowing (B).

<Coating Adhesion Evaluation>

After applying a paint to the surface-modified members prepared in Examples and Comparative Examples, the coated articles were dried overnight at room temperature. Then, each coated article was cut into a strip shape having a width of about 40 mm and a length of 50 mm, a cross-cut evaluation was performed according to a cross-cut method described in JIS K5600-5-6, and the number of peeled coating films was counted. When the number of peeled coating films was 0 out of 100, the adhesion was determined to be good (A), and when the number was 1 or more, the adhesion was determined to be poor (B).

· Paint: "V-top H overcoat" urethane paint, manufactured by Dai Nippon Toryo Co., Ltd.

· Cutting interval: 2 mm

· Number of cross cuts: 100 squares

· Peeling tape: (Nichiban) cellophane tape (registered trademark) 24 mm width

[Example 1]

(Surface-modifying Sheet (1))

A solution (a surface-modifying composition) having a solid content of 20 mass% was prepared by dissolving 100 parts by mass of a polyamide copolymer resin (AMILAN CM8000 manufactured by Toray Industries, Inc.) in a mixed solvent of ethanol (EtOH)/water/isopropyl alcohol (IPA) = 68 mass%/12 mass%/20 mass% at 40°C.
After the prepared surface-modifying composition was filtered through a nylon mesh having an opening of 188 μm, the composition was applied to a release sheet (NIFTRON 900UL: a fluorine resin sheet film (polytetrafluoroethylene (PTFE) (thickness: 0.05 mm, dimension: width: 250 mm × length: 450 mm), manufactured by Nitto Electric Corporation) with an applicator, followed by drying at 100°C for 2 minutes by a constant temperature dryer to prepare a surface-modifying sheet (1) which is a release sheet including a surface-modifying layer.

(Surface-modified Member (1))

The surface on the surface-modifying layer-side of the surface-modifying sheet (1) prepared as described above was superimposed on a carbon fiber-reinforced thermosetting epoxy resin prepreg (FK 6244C-84K, manufactured by Toray Industries, Inc.) (dimension: width 120 mm × length 150 mm × thickness 1 mm). A mold composed of upper and lower members of a press machine was heated to 150°C, the laminate was placed on the lower member such that the release sheet-side faced upward, and the laminate was preheated at 150°C for 15 seconds. After preheating, the laminate was sandwiched between upper and lower members of the mold, and heated and welded by press molding (molding pressure: 3 MPa, 150°C for 5 minutes) to prepare a surface-modified member (1).

(Coated Article (1))

After the release sheet of the surface-modified member (1) prepared as described above was peeled off, the surface-modifying layer was coated with a urethane paint "V-top H overcoat" manufactured by Dai Nippon Toryo Co., Ltd. with an applicator to prepare a coated article (1) including a coating film having a film thickness of 50 μm.

[Examples 2 to 14]

Surface-modified members (2) to (14) and coated articles (2) to (14) were produced in the same manner as in Example 1 except that materials and amounts used for the surface-modifying compositions were changed as shown in Table 1 or 2, and a preheating temperature, a preheating time, a molding temperature, and a molding time were changed as shown in Table 1 or 2.

[Comparative Example 1]

A surface-modified member (r1) and a coated article (r1) were produced in the same manner as in Example 1 except that the surface-modifying composition was not applied to the release sheet, and the release sheet was superimposed on a carbon fiber-reinforced thermosetting epoxy resin prepreg (FK 6244C-84K, manufactured by Toray Industries, Inc.).

[Comparative Example 2]

(Surface-modified Member (r2))

A release sheet (NIFTRON 900UL: fluorine resin sheet film (polytetrafluoroethylene (PTFE) (thickness: 0.05 mm, width: 250 mm × length: 450 mm), manufactured by Nitto Electric Corporation) was superimposed on a carbon fiber-reinforced thermosetting epoxy resin prepreg (FK6244C-84K, manufactured by Toray Industries, Inc.) (dimension: width: 120 mm × length: 150 mm × thickness: 1 mm). A mold composed of upper and lower members of a press machine was heated to 150°C, the laminate was placed on the lower member such that the release sheet-side faced upward, and the laminate was preheated at 150°C for 15 seconds. After preheating, the laminate was sandwiched between upper and lower members of the mold, and press-molded (molding pressure: 3 MPa, 150°C for 5 minutes). After the molding, the release sheet was peeled off, and a Sanotome Ti primer (a primer manufactured by Daiho Paint Ltd.) was applied to the peeled surface with an applicator such that the film thickness after drying was 20 μm, followed by drying at 150°C for 30 minutes by a constant temperature dryer, thereby obtaining a surface-modified member (r2).

(Coated Article (r2))

The surface-modifying layer (the primer layer) of the surface-modified member (r2) prepared as described above was coated with a urethane paint "V-top H overcoat" manufactured by Dai Nippon Toryo Co., Ltd. with an applicator to prepare a coated article (r2) including a coating film having a thickness of 50 μm.

[Comparative Example 3]

(Laminate (r3))

A release sheet (NIFTRON 900UL: fluorine resin sheet film (polytetrafluoroethylene (PTFE) (thickness: 0.05 mm, width: 250 mm × length: 450 mm), manufactured by Nitto Electric Corporation) was superimposed on a carbon fiber-reinforced thermosetting epoxy resin prepreg (FK6244C-84K, manufactured by Toray Industries, Inc.) (dimension: width: 120 mm × length: 150 mm × thickness: 1 mm). A mold composed of upper and lower members of a press machine was heated to 150°C, the laminate was placed on the lower member such that the release sheet-side faced upward, and the laminate was preheated at 150°C for 15 seconds. After preheating, the laminate was sandwiched between upper and lower members of the mold, and press-molded (molding pressure: 3 MPa, 150°C for 5 minutes). After the molding, the release sheet was peeled off, and the following surface-modifying composition filtered through a nylon mesh having an opening of 188 μm was applied to the peeled surface with an applicator such that the film thickness after drying was 40 μm, followed by drying by a constant temperature dryer at 100°C for 2 minutes to prepare a surface-modified member (r3).

(Surface-modifying Composition)

First, 100 parts by mass of a polyamide copolymer resin (AMILAN CM8000 manufactured by Toray Industries, Inc.) and 2 parts by mass of a carboxy group-containing acrylic oligomer (ARUFON UC3510 manufactured by Toagosei Co. Ltd.) were dissolved in a mixed solvent of ethanol (EtOH)/water/isopropyl alcohol (IPA) = 68 mass%/12 mass%/20 mass% at 40°C to prepare a solution (a surface-modifying composition) having a solid content of 20 mass%.

(Coated Article (r3))

The surface-modifying layer of the surface-modified member (r3) prepared as described above was coated with a urethane paint "V-top H overcoat" manufactured by Dai Nippon Toryo Co., Ltd. with an applicator to prepare a coated article (r3) including a coating film having a thickness of 50 μm.

[Comparative Examples 4 to 6]

Surface-modified members (r4) to (r6) and coated articles (r4) to (r6) were produced in the same manner as in Example 1 except that materials and amounts used for the surface-modifying compositions were changed as shown in Table 2, and preheating conditions (a preheating temperature, a preheating time) and molding conditions (a molding pressure, a molding temperature, and a molding time) were changed as shown in Table 2.

Examples and Comparative Examples are shown in Tables 1 and 2 below. In Tables 1 and 2, the temperatures described in the molding conditions are the preheating temperature and the molding temperature. The numerical values described in the composition of the thermoplastic resin represent blending amounts (parts by mass) of the respective components.

[Table 1]

Table 1

| | | | | Example | | | | | | | | | |
|---|---|---|---|---|---|---|---|---|---|---|---|---|---|
| | | | | 1 | 2 | 3 | 4 | 5 | 6 | 7 | 8 | 9 | 10 |
| Configuration | Thermoplastic resin (surface-modifying layer) | Composition | CM8000 | 100 | 100 | 100 | 100 | 100 | 100 | 100 | 100 | | |
| | | | FR-105 | | | | | | | | | 100 | 100 |
| | | | UC3510 | | 2 | 2 | 2 | 2 | | | 2 | | |
| | | | UC3000 | | | | | | 2 | | | | 2 |
| | | | UP1000 | | | | | | | 2 | | | |
| | | | C11Z-CN | | | | | | | | 20 | | |
| | | Thickness | | 10 μm | 10 μm | 10 μm | 10 μm | 10 μm | 10 μm | 10 μm | 10 μm | 10 μm | 10 μm |
| | Release film | | | NITO-FLON NO. 900UL | NITO-FLON NO. 900UL | NITO-FLON NO. 900UL | NITO-FLON NO. 900UL | NITO-FLON NO. 900UL | NITO-FLON NO. 900UL | NITO-FLON NO. 900UL | NITO-FLON NO. 900UL | NITO-FLON NO. 900UL | NITO-FLON NO. 900UL |
| | Thermosetting resin | | Product number | FK6244C-84K | FK6244C-84K | FK6244C-84K | FK6244C-84K | FK6244C-84K | FK6244C-84K | FK6244C-84K | FK6244C-84K | FK6244C-84K | FK6244C-84K |
| | | | T1 | 103°C | 103°C | 103°C | 103°C | 103°C | 103°C | 103°C | 103°C | 103°C | 103°C |
| | | | T3 | 210°C | 210°C | 210°C | 210°C | 210°C | 210°C | 210°C | 210°C | 210°C | 210°C |
| Lamination method | Surface-modifying layer/thermosetting resin | | | Transfer | Transfer | Transfer | Transfer | Transfer | Transfer | Transfer | Transfer | Transfer | Transfer |
| Molding condition | Lamination of surface-modifying layer | | | A | A | A | A | A | A | A | A | A | A |
| | Temperature (T2) | | | 150°C | 120°C | 150°C | 150°C | 150°C | 150°C | 150°C | 150°C | 150°C | 150°C |
| | Time | Preheating | | 15 seconds | 0 seconds | 15 seconds | 60 seconds | 180 seconds | 15 seconds | 15 seconds | 15 seconds | 15 seconds | 0 seconds |
| | | Molding | | 5 minutes | 20 minutes | 5 minutes | 5 minutes | 5 minutes | 5 minutes | 5 minutes | 5 minutes | 5 minutes | 5 minutes |
| | Pressure | | | 3 MPa | 3 MPa | 3 MPa | 3 MPa | 3 MPa | 3 MPa | 3 MPa | 3 MPa | 3 MPa | 3 MPa |
| Cure degree | Matrix resin | Before molding | | 20% | 0% | 20% | 75% | 93% | 20% | 20% | 20% | 20% | 0% |

| | | Example | | | | | | | | | |
|---|---|---|---|---|---|---|---|---|---|---|---|
| | | 1 | 2 | 3 | 4 | 5 | 6 | 7 | 8 | 9 | 10 |
| Molecular weight | Surface-modifying layer (base polymer) | 20000 | 20000 | 20000 | 20000 | 20000 | 20000 | 20000 | 20000 | 45000 | 45000 |
| | HSP distance | 4.2 | 4.2 | 4.2 | 4.2 | 4.2 | 4.2 | 4.2 | 4.2 | 4.8 | 4.8 |
| Mixed layer | Thickness | 1 μm | 2 μm | 900 nm | 400 nm | 250 nm | 450 nm | 450 nm | 1 μm | 400 nm | 350 nm |
| Yellowing-inhibitory effect | Δb | 3.47 | 3.09 | 3.35 | 4.62 | 4.92 | 4.13 | 4.33 | 3.57 | 4.83 | 4.98 |
| | Evaluation | A | A | A | A | A | A | A | A | A | A |
| Adhesion | Number of peeled coating films (out of 100) | 0 | 0 | 0 | 0 | 0 | 0 | 0 | 0 | 0 | 0 |
| | Evaluation | A | A | A | A | A | A | A | A | A | A |

EP 4 299 307 A1

[Table 2]

Table 2

| Configuration | | | Example | | | | Comparative Example | | | | | |
|---|---|---|---|---|---|---|---|---|---|---|---|---|
| | | | 11 | 12 | 13 | 14 | 1 | 2 | 3 | 4 | 5 | 6 |
| Thermoplastic resin (surface-modifying layer) | Composition | CM8000 | | | | | | | | | | |
| | | FR-105 | 100 | 100 | | | | | 100 | 100 | 100 | 100 |
| | | PA-100 | | | 100 | | | | | | | |
| | | UC3510 | | | | | | | | | | |
| | | UC3000 | 2 | 2 | 2 | 100 | | | 2 | 2 | 2 | 2 |
| | | C11Z-CN | | 20 | | | | | | | | |
| Primer | | | | | | | - | Santomo Ti primer | | | | |
| Thickness | | | 10 μm | 10 μm | 10 μm | 10 μm | - | 20 μm | 40 μm | 10 μm | 10 μm | 10 μm |
| Release film | | | NITO-FLON NO. 900UL | NITO-FLON NO. 900UL | NITO-FLON NO. 900UL | NITO-FLON NO. 900UL | NITO-FLON NO. 900UL | NITO-FLON NO. 900UL | NITO-FLON NO. 900UL | NITO-FLON NO. 900UL | NITO-FLON NO. 900UL | NITO-FLON NO. 900UL |
| Thermosetting resin | | Product number | FK6244C-84K | FK6244C-84K | FK6244C-84K | FK6244C-84K | FK6244C-84K | FK6244C-84K | FK6244C-84K | FK6244C-84K | FK6244C-84K | FK6244C-84K |
| | | T1 | 103°C | 103°C | 103°C | 103°C | 103°C | 103°C | 103°C | 103°C | 103°C | 103°C |
| | | T3 | 210°C | 210°C | 210°C | 210°C | 210°C | 210°C | 210°C | 210°C | 210°C | 210°C |
| Lamination method | Surface-modifying layer/thermosetting resin | | Transfer | Transfer | Transfer | Transfer | - | Coating | Coating | Transfer | Transfer | Transfer |

| | | | Example | | | | Comparative Example | | | | | |
|---|---|---|---|---|---|---|---|---|---|---|---|---|
| | | | 11 | 12 | 13 | 14 | 1 | 2 | 3 | 4 | 5 | 6 |
| Molding condition | Lamination of surface-modifying layer | | A | A | A | A | B | B | B | A | A | A |
| | Temperature (T2) | | 120°C | 150°C | 150°C | 150°C | 150°C | 150°C | 150°C | 150°C | 200°C | 150°C |
| | Time | Preheating | 0 seconds | 0 seconds | 15 seconds | 15 seconds | 15 seconds | 15 seconds | 15 seconds | 300 seconds | 0 seconds | 300 seconds |
| | | Molding | 5 minutes | 5 minutes | 5 minutes | 5 minutes | 5 minutes | 5 minutes | 5 minutes | 5 minutes | 3 minutes | 5 minutes |
| | Pressure | | 3 MPa | 3 MPa | 3 MPa | 3 MPa | 3 MPa | 3 MPa | 3 MPa | 3 MPa | 5 MPa | 3 MPa |
| Cure degree | Matrix resin | Before molding | 0% | 0% | 20% | 20% | 20% | 20% | 20% | 100% | 100% | 100% |
| Molecular weight | Surface-modifying layer (base polymer) | | 45000 | 45000 | 36000 | 10000 | - | - | - | 20000 | 20000 | 45000 |
| HSP distance | | | 4.8 | 4.8 | 7.7 | 7.2 | - | - | - | 4.2 | 4.2 | 4.8 |
| Mixed layer | Thickness | | 450 nm | 900 nm | 600 nm | 250 nm | 0 nm | 0 nm | 0 nm | 200 nm | 150 nm | 200 nm |
| Yellowing-inhibitory effect | Δb | | 4.88 | 4.68 | 1.50 | 3.57 | 5.18 | 14.56 | 9.16 | 5.72 | 6.26 | 5.96 |
| | Evaluation | | A | A | A | A | B | B | B | B | B | B |
| Adhesion | Number of peeled coating films (out of 100) | | 0 | 0 | 0 | 0 | 100 | 86 | 100 | 0 | 0 | 0 |
| | Evaluation | | A | A | A | A | B | B | B | A | A | A |

EP 4 299 307 A1

The materials shown in Tables 1 and 2 are as follows.

· Polyamide resin

CM8000: polyamide copolymer resin (AMILAN manufactured by Toray Industries, Inc.)
FR-105: methoxymethylated polyamide (Fine Resin manufactured by Namariichi Co., Ltd)
PA-100: polyamide copolymer resin (solvent-soluble grade PA-100 manufactured by T&K TOKA Co., Ltd.)

· Oligomer

UC3510: carboxy group-containing acrylic oligomer (ARUFON manufactured by Toagosei Co., Ltd.)
UC3000: carboxy group-containing acrylic oligomer (ARUFON manufactured by Toagosei Co., Ltd.)
UP1000: non-functional acrylic oligomer (ARUFON manufactured by Toagosei Co., Ltd.)

· Curing agent
C11Z-CN: imidazole curing agent (CUREZOL manufactured by Shikoku Chemicals Corporation)
· Commercially available primer
Santomo Ti primer: (Santomo manufactured by Daiho Paint Ltd.)
· Release sheet
NITOFLON No. 900UL: fluorine resin sheet film (polytetrafluoroethylene (PTFE), NIFTRON 900UL manufactured by Nitto Electric Corporation)
· Thermosetting resin
FK6244C-84K: carbon fiber-reinforced thermosetting epoxy resin prepreg (FK6244C-84K manufactured by Toray Industries, Inc.)

Industrial Applicability

According to the present invention, a surface-modified member and a coated article having excellent weather resistance and excellent adhesive strength can be provided. A method for producing the surface-modified member and a method for producing the coated article, which are excellent in productivity, can be provided.

While the present invention has been described in detail with reference to specific embodiments, it will be apparent to those skilled in the art that various changes and modifications can be made without departing from the spirit and scope of the present invention.

The present application is based on the Japanese Patent Application (Japanese Patent Application No. 2021-30600) filed on February 26, 2021, and the contents of which are incorporated herein by reference.

Reference Signs List

10 Surface-modifying layer
20 Mixed layer
30 Resin member
40 Release sheet
50 Resin material
60 Coating film
100 Surface-modified member
200 Surface-modifying sheet
300 Surface-modifying layer-provided resin member
400 Coated article

**Claims**

1. A surface-modified member in which a surface-modifying layer is laminated over at least a part of a resin member containing a thermosetting resin, the surface-modified member comprising: a mixed layer that the resin member and the surface-modifying layer are mixed between the resin member and the surface-modifying layer, wherein the mixed layer has a thickness of 250 nm to 10 $\mu$m.

2. The surface-modified member according to claim 1, wherein the surface-modifying layer contains a thermoplastic resin.

3. The surface-modified member according to claim 2, wherein the thermoplastic resin has a weight average molecular weight of 10000 to 100000.

4. The surface-modified member according to claim 2 or 3, wherein an HSP distance between the thermoplastic resin and the thermosetting resin is 8 or less.

5. The surface-modified member according to any one of claims 2 to 4, wherein the thermoplastic resin is a polymer having a polar unit and a nonpolar unit.

6. The surface-modified member according to any one of claims 1 to 5, wherein the thermosetting resin has an aromatic group.

7. The surface-modified member according to any one of claims 1 to 6, wherein the thermosetting resin has a benzene ring-containing group.

8. The surface-modified member according to any one of claims 1 to 7, wherein the thermosetting resin is an epoxy resin.

9. The surface-modified member according to claim 8, wherein the epoxy resin has a structure derived from bisphenol A type glycidyl ether.

10. The surface-modified member according to any one of claims 1 to 9, wherein the resin member contains a fiber-reinforced resin.

11. The surface-modified member according to any one of claims 1 to 10, wherein the surface-modified member has a Δb* value of 5 or less, as defined by the following equation (1),

$$\Delta b^* \text{ value} = b^*1 - b^*0 \qquad \text{Equation (1)}$$

(in the equation (1), $b^*0$ is a b* value of the surface on the surface-modifying layer-side of the surface-modified member, which is obtained by measuring with light having an incident angle of 45° by a spectrophotometer at a reflection angle of 45° before irradiating the surface-modified member with ultraviolet light at an irradiation intensity of 0.35 W/m$^2$/h, and $b^*1$ is a b* value of the surface on the surface-modifying layer-side of the surface-modified member, which is obtained by measuring with light having an incident angle of 45° by a spectrophotometer at a reflection angle of 45° after irradiating the surface-modified member with ultraviolet light at an irradiation intensity of 0.35 W/m$^2$/h for 250 hours).

12. A coated article in which a coating film is provided on at least a part of the surface-modified member according to any one of claims 1 to 11.

13. The coated article according to claim 12, wherein the coating film is at least one selected from a paint layer, a print layer, a vapor deposition layer, and a plating layer.

14. The coated article according to claim 12, wherein the coating film is a transparent resin layer

15. A method for producing a surface-modified member in which a surface-modifying layer containing a thermoplastic resin is laminated over at least a part of a resin member containing a thermosetting resin, the method comprising: a lamination step of laminating the surface-modifying layer over the resin member by heat pressing, wherein a cure degree of the thermosetting resin at a start of the heat pressing is 0% to 93%.

16. A method for producing the coated article according to any one of claims 12 to 14, comprising: a lamination step of laminating the surface-modifying layer over the resin member by heat pressing to produce the surface-modified member; and a step of forming the coating film on the surface-modifying layer-side of the surface-modified member, wherein a cure degree of the thermosetting resin at a start of the heat pressing is 0% to 93%.

*FIG.1*

100

10
20
30

*FIG.2*

300

40
10   } 200
50

*FIG.3*

400

60
10
20   } 100
30

## INTERNATIONAL SEARCH REPORT

| International application No. |
|---|
| **PCT/JP2022/006227** |

| A. | CLASSIFICATION OF SUBJECT MATTER |
|---|---|

*B32B 5/28*(2006.01)i; *B32B 27/08*(2006.01)i; *B32B 27/38*(2006.01)i
FI:  B32B27/08; B32B27/38; B32B5/28 Z

According to International Patent Classification (IPC) or to both national classification and IPC

| B. | FIELDS SEARCHED |
|---|---|

Minimum documentation searched (classification system followed by classification symbols)

 B32B1/00-43/00, C08J7/04-7/06

Documentation searched other than minimum documentation to the extent that such documents are included in the fields searched

 Published examined utility model applications of Japan 1922-1996
 Published unexamined utility model applications of Japan 1971-2022
 Registered utility model specifications of Japan 1996-2022
 Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2019/208665 A1 (NITTO DENKO CORP.) 31 October 2019 (2019-10-31) claims, paragraphs [0035], [0060], [0081], [0085], [0088] | 1-5, 8, 11-16 |
| Y | | 6-7, 9-10 |
| Y | WO 2018/043490 A1 (MITSUBISHI CHEMICAL CORP.) 08 March 2018 (2018-03-08) paragraph [0028] | 6-7, 9-10 |
| Y | WO 2019/208666 A1 (NITTO DENKO CORP.) 31 October 2019 (2019-10-31) paragraph [0071] | 10 |
| A | JP 5168928 B2 (TORAY IND., INC.) 27 March 2013 (2013-03-27) entire text | 1-16 |
| A | JP 2009-51100 A (SHOWA HIGHPOLYMER CO., LTD.) 12 March 2009 (2009-03-12) entire text | 1-16 |
| A | JP 2000-43220 A (NIPPON SHOKUBAI CO., LTD.) 15 February 2000 (2000-02-15) entire text | 1-16 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **08 April 2022** | **26 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2022/006227** |

**Box No. III    Observations where unity of invention is lacking (Continuation of item 3 of first sheet)**

This International Searching Authority found multiple inventions in this international application, as follows:

Invention 1: Claims 1-14 and 16
  Claims 1-2, 5, 8 and 11-13 lack novelty in light of document 1, and thus do not have a special technical feature. However, claim 3 dependent on claim 1 has the special technical feature wherein "the thermoplastic resin has a weight average molecular weight of 10,000-100,000".
  Furthermore, claims 4, 6-7, 9-10, 14 and 16 are dependent on claim 1 and are inventively linked to claim 1, and are thus classified as invention 1.
  Accordingly, claims 1-14 and 16 are classified as invention 1.

Invention 2: Claim 15
  The invention in claim 15 is not dependent on claim 1 and is not an invention in the same category that includes all matters specifying the invention set forth in claim 1.
  Accordingly, the invention in claim 15 is classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**EP 4 299 307 A1**

| International application No. |
| --- |
| **PCT/JP2022/006227** |

| Patent document cited in search report | Publication date (day/month/year) | Patent family member(s) | Publication date (day/month/year) |
| --- | --- | --- | --- |
| WO 2019/208665 A1 | 31 October 2019 | US 2021/0238454 A1 claims, paragraphs [0055], [0093], [0129], [0133], [0144] EP 3785899 A1 CN 112004668 A KR 10-2021-0005869 A TW 201945444 A | |
| WO 2018/043490 A1 | 08 March 2018 | US 2019/0185612 A1 paragraph [0074] EP 3505552 A1 CN 109563239 A | |
| WO 2019/208666 A1 | 31 October 2019 | US 2021/0238373 A1 paragraph [0140] EP 3785898 A1 CN 112020429 A KR 10-2021-0005870 A TW 201946768 A | |
| JP 5168928 B2 | 27 March 2013 | JP 2007-254718 A | |
| JP 2009-51100 A | 12 March 2009 | (Family: none) | |
| JP 2000-43220 A | 15 February 2000 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005213337 A
- JP 2020007408 A
- JP 2009505871 A
- JP 2008250106 A
- JP 2017128722 A
- JP 2021030600 A